(19) **Europäisches Patentamt / European Patent Office / Office européen des brevets**

(11) **EP 4 738 950 A1**

(12) **EUROPEAN PATENT APPLICATION**
published in accordance with Art. 153(4) EPC

(43) Date of publication:
06.05.2026 Bulletin 2026/19

(21) Application number: 24844734.4

(22) Date of filing: 19.07.2024

(51) International Patent Classification (IPC):
*H04W 64/00* (2009.01)

(52) Cooperative Patent Classification (CPC):
G07C 9/00; H04W 4/02; H04W 4/44; H04W 4/80;
H04W 64/00

(86) International application number:
PCT/CN2024/106521

(87) International publication number:
WO 2025/021043 (30.01.2025 Gazette 2025/05)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 25.07.2023 CN 202310924187

(71) Applicant: Huawei Technologies Co., Ltd.
Shenzhen, Guangdong 518129 (CN)

(72) Inventors:
• LI, Zhi
Shenzhen, Guangdong 518129 (CN)
• JIA, Qinyong
Shenzhen, Guangdong 518129 (CN)
• WU, Daijun
Shenzhen, Guangdong 518129 (CN)

(74) Representative: Epping - Hermann - Fischer
Patentanwaltsgesellschaft mbH
Schloßschmidstraße 5
80639 München (DE)

(54) **DIGITAL CAR KEY POSITIONING SYSTEM AND METHOD, AND RELATED APPARATUS**

(57) This application discloses a digital vehicle key positioning system and method, and a related apparatus, and pertains to the field of vehicle control technologies. In the method, a vehicle can receive location information sent by a terminal device, and determine location information of a digital vehicle key relative to the vehicle based on the location information of the terminal device and wireless signals respectively collected by a plurality of short-range wireless communication modules in the vehicle. In other words, the location information determined by the terminal device and the wireless signals collected by the vehicle are fused to implement more precise positioning of the digital vehicle key, thereby reducing a positioning error of the digital vehicle key, improving positioning precision, and effectively resolving a ping-pong problem of vehicle unlocking and locking and consistency problems of unlocking distances and locking distances.

FIG. 4

**Description**

This application claims priority to Chinese Patent Application No. 202310924187.3, filed on July 25, 2023 and entitled "DIGITAL VEHICLE KEY POSITIONING SYSTEM AND METHOD, AND RELATED APPARATUS", which is incorporated herein by reference in its entirety.

**TECHNICAL FIELD**

This application relates to the field of vehicle control technologies, and in particular, to a digital vehicle key positioning system and method, and a related apparatus.

**BACKGROUND**

A digital vehicle key uses a terminal device like a smartphone, a smart band, or a smart watch as a carrier to implement unlocking and locking control of a vehicle, start and stop control of a head unit, temperature control of an in-vehicle air conditioner, and the like. Precise control of the vehicle by using the digital vehicle key mainly depends on precise positioning of the digital vehicle key. For example, precise unlocking and locking of the vehicle is controlled by precisely positioning the digital vehicle key.

In a related technology, positioning of the digital vehicle key is mainly implemented based on Bluetooth positioning. For example, a distance between the digital vehicle key and the vehicle is determined based on strength of a Bluetooth signal sent, to the vehicle, by a terminal device having the digital vehicle key.

However, when a user carrying the terminal device turns around, shakes an arm, places the terminal device in a backpack or a pocket, or the like, the Bluetooth signal received by the vehicle is unstable. As a result, a positioning error of the digital vehicle key is large, and a ping-pong problem of vehicle unlocking and locking and consistency problems of unlocking distances and locking distances easily occur.

**SUMMARY**

This application provides a digital vehicle key positioning system and method, and a related apparatus, to reduce a positioning error of a digital vehicle key, improve positioning precision, and reduce a ping-pong problem of vehicle unlocking and locking and consistency problems of unlocking distances and locking distances. The technical solutions are as follows.

According to a first aspect, a digital vehicle key positioning system is provided. The system includes a vehicle and a terminal device. The vehicle has a plurality of short-range wireless communication modules, and the terminal device has a digital vehicle key of the vehicle.

The terminal device is configured to: transmit wireless signals, and send location information of the terminal device to the vehicle.

The vehicle is configured to: collect the wireless signals by using the plurality of short-range wireless communication modules, receive the location information of the terminal device, and obtain a location of the digital vehicle key relative to the vehicle based on the location information of the terminal device and the wireless signals respectively collected by the plurality of short-range wireless communication modules.

In other words, in this solution, the location information determined by the terminal device and the wireless signal collected by the vehicle are fused to implement more precise positioning of the digital vehicle key, thereby reducing a positioning error of the digital vehicle key, improving positioning precision, and effectively resolving the ping-pong problem of vehicle unlocking and locking and consistency problems of the unlocking distances and the locking distances. Optionally, the vehicle is further configured to send a first instruction to the terminal device, and the terminal device is configured to send the location information of the terminal device to the vehicle after receiving the first instruction. In other words, in this solution, the vehicle is supported in controlling the terminal device to send the location information of the terminal device. Optionally, the vehicle is further configured to send a second instruction to the terminal device, and the terminal device is further configured to stop sending the location information of the terminal device to the vehicle after receiving the second instruction. In other words, in this solution, the vehicle is supported in controlling the terminal device to stop sending the location information of the terminal device. In this way, resource consumption of the terminal device and the vehicle can be reduced to some extent.

Optionally, the terminal device has a pedestrian dead reckoning (pedestrian dead reckoning, PDR) function, and the location information of the terminal device includes PDR data. In other words, this solution can be implemented by using the PDR function of the terminal device.

According to a second aspect, a digital vehicle key positioning method is provided. The method is applied to a vehicle, the vehicle has a plurality of short-range wireless communication modules, and the method includes:

The vehicle receives location information of a terminal device, where the terminal device has a digital vehicle key of the vehicle; the vehicle respectively collects, by using the plurality of short-range wireless communication modules, wireless signals transmitted by the terminal device; and the vehicle obtains a location of the digital vehicle key relative to the vehicle based on the location information of the terminal device and the wireless signals respectively collected by the plurality of short-range wireless communication modules.

In other words, in this solution, the location information determined by the terminal device and the wireless signal collected by the vehicle are fused to implement more precise positioning of the digital vehicle key, thereby reducing a positioning error of the digital vehicle key, improving positioning precision, and effectively resolving the ping-pong problem of vehicle unlocking and locking and consistency problems of unlocking distances and locking distances.

Optionally, the method further includes: The vehicle sends a first instruction to the terminal device, where the first instruction indicates the terminal device to send the location information of the terminal device. In other words, in this solution, the vehicle is supported in controlling the terminal device to send the location information of the terminal device.

Optionally, the first instruction is sent when any one of a plurality of first conditions is met. The plurality of first conditions include: A wireless communication connection is established between the vehicle and the terminal device; the vehicle is parked or shifted into a parking gear; and the vehicle is parked and a door of the vehicle is opened.

Optionally, the method further includes: The vehicle sends a second instruction to the terminal device, where the second instruction indicates the terminal device to stop sending the location information of the terminal device. In other words, in this solution, the vehicle is supported in controlling the terminal device to stop sending the location information of the terminal device. In this way, resource consumption of the terminal device and the vehicle can be reduced to some extent.

Optionally, the second instruction is sent when any one of a plurality of second conditions is met. The plurality of second conditions include: The vehicle is unlocked or the vehicle exits the parking gear; the wireless communication connection between the terminal device and the vehicle is disconnected; and the terminal device reaches a locking area of the vehicle in a process of moving away from the vehicle.

It can be learned from the foregoing that, after the wireless communication connection is established between the vehicle and the terminal device, the vehicle sends the first instruction to the terminal device, to indicate the terminal device to start sending the location information of the terminal device. The vehicle establishes the wireless communication connection to the terminal device in the process in which the terminal device approaches the vehicle. In this way, the terminal device starts to send the location information of the terminal device to the vehicle in the process in which the terminal device approaches the vehicle, so that the vehicle starts to position the terminal device, so as to implement unlocking control on the vehicle based on a positioning result. When the vehicle implements unlocking on the vehicle or exits the parking gear based on the positioning result, the vehicle may indicate, by using a second instruction, the terminal device to stop sending the location information of the terminal device. Then, the vehicle may normally travel. When the vehicle is parked or shifted into the parking gear, or when the vehicle is parked and the door of the vehicle is opened, the vehicle sends the first instruction to the terminal device again, to indicate the terminal device to continue to send the location information of the terminal device. The vehicle being parked or shifted into the parking gear or the door of the vehicle being opened indicates that a driver usually gets off and leaves the vehicle, that is, the terminal device is to be far away from the vehicle. In this way, the terminal device continues to send the location information of the terminal device to the vehicle in a process in which the terminal device moves away from the vehicle, so that the vehicle starts to position the terminal device, to implement locking control on the vehicle based on a positioning result.

When the vehicle determines, based on the positioning result, that the terminal device reaches a locking area of the vehicle in the process in which the terminal device moves away from the vehicle, and implements locking of the vehicle, or when the wireless communication connection to the terminal device is disconnected, the vehicle may indicate, by using the second instruction, the terminal device to stop sending the location information of the terminal device.

Optionally, the location information of the terminal device includes information about a plurality of trajectory points. The method further includes: The vehicle sends a third instruction to the terminal device, where the third instruction indicates the terminal device to determine the information about the plurality of trajectory points at a first frequency. In other words, in this solution, the vehicle is further supported in controlling a frequency at which the terminal device outputs a trajectory point. In specific implementation, the frequency at which the terminal device outputs the trajectory point can be controlled to be consistent with a frequency at which the vehicle determines an estimated value of a distance between each short-range wireless communication module and the terminal device based on a wireless signal, to facilitate fusion positioning. Optionally, the terminal device has a PDR function, and the location information of the terminal device includes PDR data. In other words, this solution can be implemented by using the PDR function of the terminal device.

Optionally, the method further includes: when it is determined that the wireless signals collected by the plurality of short-range wireless communication modules meet a third condition, performing the step of obtaining the location of the digital vehicle key relative to the vehicle based on the location information of the terminal device and the wireless signals respectively collected by the plurality of short-range wireless communication modules. The third condition includes: Signal strength of a plurality of consecutive frames of signals in wireless signals collected by at least P short-range wireless communication modules in the plurality of short-range wireless communication modules exceeds a signal strength threshold. P is not less than 1 and is not greater than a total quantity of the plurality of short-range wireless communication modules. In other words, when it is determined that the wireless signals collected by the plurality of short-range wireless communication modules meet the third condition, a positioning algorithm is determined to take effect. This can reduce resource waste of the vehicle to some extent, and ensure positioning precision and accuracy.

Optionally, that the vehicle obtains the location of the digital vehicle key relative to the vehicle based on the location information of the terminal device and the wireless signals respectively collected by the plurality of short-range wireless communication modules includes: obtaining the location of the digital vehicle key relative to the vehicle based on the location information of the terminal device, the wireless signals respectively collected by the plurality of short-range wireless communication modules, and location information of the plurality of short-range wireless communication modules. In other words, in this solution, the location information of the short-range wireless communication module can be further fused to precisely position the digital vehicle key.

Optionally, each short-range wireless communication module is a Bluetooth module, an ultra-wideband (ultra-wideband, UWB) module, a SparkLink basic (SparkLink basic, SLB) module, or a SparkLink low energy (SparkLink low energy, SLE) module.

According to a third aspect, a digital vehicle key positioning method is provided. The method is applied to a terminal device, the terminal device has a digital vehicle key of a vehicle, and the method includes:

The terminal device transmits a wireless signal, receives a first instruction sent by the vehicle, and sends location information of the terminal device to the vehicle after receiving the first instruction.

The location information of the terminal device and the wireless signal are used by the vehicle to obtain the location of the digital vehicle key relative to the vehicle.

In other words, in this solution, the location information determined by the terminal device and the wireless signal collected by the vehicle are fused to implement more precise positioning of the digital vehicle key, thereby reducing a positioning error of the digital vehicle key, improving positioning precision, and effectively resolving the ping-pong problem of vehicle unlocking and locking and consistency problems of unlocking distances and locking distances. In addition, in this solution, the vehicle is supported in controlling the terminal device to send the location information of the terminal device.

Optionally, the method further includes: The terminal device receives a second instruction sent by the vehicle, and stops sending the location information of the terminal device to the vehicle after receiving the second instruction. In other words, in this solution, the vehicle is supported in controlling the terminal device to stop sending the location information of the terminal device. In this way, resource consumption of the terminal device and the vehicle can be reduced to some extent.

Optionally, the location information of the terminal device includes information about a plurality of trajectory points. The method further includes: receiving a third instruction sent by the vehicle, where the third instruction indicates a first frequency; and after the third instruction is received, determining the information about the plurality of trajectory points at the first frequency. In other words, in this solution, the vehicle is further supported in controlling a frequency at which the terminal device outputs a trajectory point. In specific implementation, the frequency at which the terminal device outputs the trajectory point can be controlled to be consistent with a frequency at which the vehicle determines an estimated value of a distance between each short-range wireless communication module and the terminal device based on a wireless signal, to facilitate fusion positioning.

Optionally, the terminal device has a pedestrian dead reckoning PDR function, and the location information of the terminal device includes PDR data. In other words, this solution can be implemented by using the PDR function of the terminal device.

Optionally, the method further includes: obtaining a fourth instruction generated based on an operation of a user on the terminal device; and after the fourth instruction is obtained, enabling the function of sending the location information of the terminal device to the vehicle. In other words, in this solution, the user is supported in selecting whether to send the location information of the terminal device to the vehicle.

According to a fourth aspect, a digital vehicle key positioning apparatus is provided. The digital vehicle key positioning apparatus has a function of implementing behavior in the digital vehicle key positioning method in the second aspect or the third aspect. The digital vehicle key positioning apparatus includes one or more modules. The one or more modules are configured to implement the digital vehicle key positioning method provided in the second aspect or the third aspect. According to a fifth aspect, a computing device is provided. The computing device includes a processor and a memory. The memory is configured to: store a program for performing the digital vehicle key positioning method provided in the second aspect or the third aspect, and store data for implementing the digital vehicle key positioning method provided in the second aspect or the third aspect. The processor is configured to execute the program stored in the memory. The computing device may further include a communication bus, and the communication bus is configured to establish a connection between the processor and the memory.

According to a sixth aspect, a computer-readable storage medium is provided. The computer-readable storage medium stores instructions. When the instructions are run on a processor, the processor is enabled to perform the steps of the digital vehicle key positioning method in the second aspect or the third aspect.

According to a seventh aspect, a computer program product including instructions is provided. When the instructions are run on a processor, the processor is enabled to perform the steps of the digital vehicle key positioning method in the second aspect or the third aspect.

Technical effect obtained in the fourth aspect to the seventh aspect is similar to technical effect obtained through corresponding technical means in the first aspect to the third aspect. Details are not described herein again.

## BRIEF DESCRIPTION OF DRAWINGS

FIG. 1 is a diagram of an architecture of a digital vehicle key positioning system according to an embodiment of this application;

FIG. 2 is a diagram of a structure of a vehicle according to an embodiment of this application;

FIG. 3 is a diagram of a structure of an electronic device according to an embodiment of this application;

FIG. 4 is a flowchart of a digital vehicle key positioning method according to an embodiment of this application;

FIG. 5 is a diagram of a location relationship according to an embodiment of this application;

FIG. 6 is a diagram of a function for controlling unlocking and locking of a vehicle according to an embodiment of this application;

FIG. 7 is a diagram of a positioning algorithm according to an embodiment of this application;

FIG. 8 is a diagram of a structure of a digital vehicle key positioning apparatus according to an embodiment of this application; and

FIG. 9 is a diagram of a structure of another digital vehicle key positioning apparatus according to an embodiment of this application.

## DESCRIPTION OF EMBODIMENTS

To make objectives, technical solutions, and advantages of embodiments of this application clearer, the following further describes implementations of this application in detail with reference to the accompanying drawings.

For ease of understanding, terms in embodiments of this application are described first.

Digital vehicle key: The digital vehicle key is a vehicle key that is implemented by using a terminal device like a smartphone, an electronic band, or an electronic watch as a carrier. The digital vehicle key is usually a type of functional software that can implement functions such as unlocking and locking control of a vehicle, start and stop control of a head unit, and temperature control of an in-vehicle air conditioner. In embodiments of this application, that the terminal device has the digital vehicle key of the vehicle means that the terminal device is installed with the digital vehicle key functional software. Certainly, if the digital vehicle key is implemented by combining software and hardware, that the terminal device has the digital vehicle key of the vehicle means that the terminal device is configured with software and hardware of the digital vehicle key function. PDR (pedestrian dead reckoning) algorithm: The pedestrian dead reckoning algorithm is used for processing sensor data collected by one or more sensors such as an inertial measurement unit (inertial measurement unit, IMU), a visual-inertial odometry (visual-inertial odometry, VIO), a wheel speed sensor, an accelerometer, a magnetometer, and a gyroscope, including measuring and collecting statistics on a quantity of steps, a step length, and a direction of walking of a pedestrian, to deduce information such as a walking trajectory of the pedestrian.

Short-range wireless communication: Information is transmitted by using radio waves by both a communication receiver and a communication transmitter, and the information can be transmitted within a short range (for example, within a range of tens of meters). The short-range wireless communication is mainly communication performed by using an IEEE802.11 communication protocol, a wireless universal serial bus (Universal Serial Bus, USB), and the like. In embodiments of this application, a short-range wireless communication module may be a Bluetooth module, a UWB module, an SLE module, an SLB module, or the like. The short-range wireless communication module may also be referred to as a short-range communication module, a short-range communication base station, a wireless communication module, a wireless base station, a wireless node, or the like.

The following describes a digital vehicle key positioning system provided in embodiments of this application.

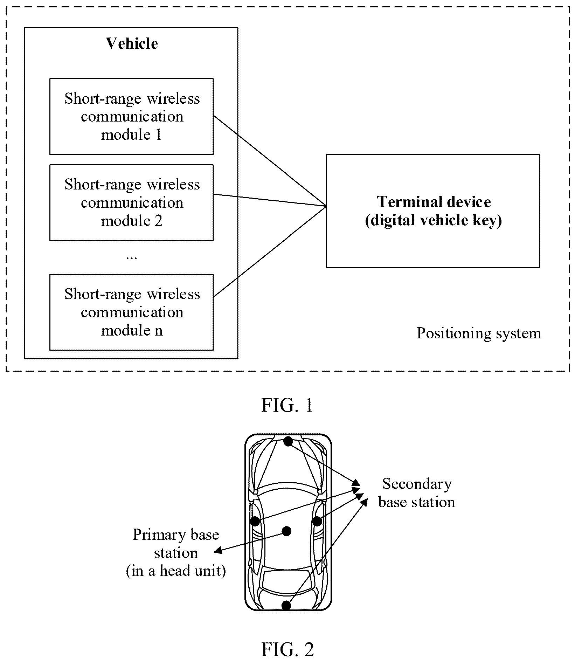

FIG. 1 is a diagram of an architecture of a digital car key positioning system according to an embodiment of this application. Refer to FIG. 1. The positioning system includes a vehicle and a terminal device. The vehicle has a plurality of short-range wireless communication modules, for example, includes a short-range wireless communication module 1 to a short-range wireless communication module n shown in FIG. 1. The plurality of short-range wireless communication modules are located at different locations, and the terminal device has a digital vehicle key of the vehicle. Each of the plurality of short-range wireless communication modules may be a Bluetooth module, a UWB module, an SLB module, an SLE module, or the like. The short-range wireless communication modules may be the same or different.

The vehicle may establish a wireless communication connection to the terminal device by using one of the plurality of short-range wireless communication modules. For example, the plurality of short-range wireless communication modules include one primary base station and at least one secondary base station. The vehicle may detect a wireless signal in an environment by using the primary base station, and establish, after detecting a wireless signal transmitted by the terminal device, the wireless communication connection to the terminal device based on the detected wireless signal.

For example, the primary base station may be a Bluetooth module in a head unit of the vehicle, and the terminal device also includes a Bluetooth module. After detecting, by using the Bluetooth module in the head unit, a Bluetooth signal transmitted by the Bluetooth module of the terminal device, the head unit establishes a Bluetooth connection to the terminal device based on the detected Bluetooth signal.

In this embodiment of this application, the terminal device is configured to: transmit a wireless signal, and send location information of the terminal device to the vehicle after establishing the wireless communication connection to the vehicle. The vehicle is configured to: receive the location information of the terminal device, respectively collect wireless signals by using the plurality of wireless signals, and obtain a location of the digital vehicle key relative to the vehicle based on the location information of the terminal device and the wireless signals respectively collected by the plurality of short-range wireless communication modules.

Optionally, the vehicle is further configured to send a first instruction to the terminal device, and the terminal device is configured to send the location information of the terminal device to the vehicle after receiving the first instruction; and/or the vehicle is further configured to send a second instruction to the terminal device, and the terminal device is configured to stop sending the location information of the terminal device to the vehicle after receiving the second instruction. In other words, the vehicle can control the terminal device to start and/or stop sending the location information.

In this embodiment of this application, the terminal device has a PDR function, and the location information of the terminal device includes PDR data. It should be understood that the PDR function is not intended to limit embodiments of this application. In some other embodiments, the terminal device may alternatively determine the location information of the terminal device by using another function similar to the PDR function.

With reference to the PDR function, the first instruction, and the second instruction, the first instruction sent by the vehicle to the terminal device may be referred to as a PDR start instruction, and the second instruction may be referred to as a PDR stop instruction. The terminal device can enable the PDR function under an indication of the PDR enabling instruction sent by the vehicle. After the PDR function is enabled, the terminal device runs a PDR algorithm to determine the location information of the terminal device, and sends the location information of the terminal device to the vehicle. Alternatively, the terminal device can stop the PDR function under an indication of the PDR stop instruction sent by the vehicle. After stopping the PDR function, the terminal device stops running a PDR algorithm, and stops sending the location information of the terminal device to the vehicle.

In this embodiment of this application, the terminal device may be an electronic device like a smartphone, a smart band, or a smart watch.

FIG. 2 is a diagram of a structure of a vehicle according to an embodiment of this application. Refer to FIG. 2. The vehicle has a plurality of short-range wireless communication modules. The plurality of short-range wireless communication modules include one primary base station and four secondary base stations. The vehicle includes a head unit, and the head unit includes the primary base station. As shown in FIG. 2, the head unit is located near a center of the vehicle, and the four secondary base stations are respectively located at a middle position of the head of the vehicle, a middle position of the rear of the vehicle, and middle positions of two sides of the vehicle.

Certainly, the four secondary base stations may alternatively be respectively located near four top corners of the vehicle or at other locations. Locations of the plurality of short-range wireless communication modules are not limited in embodiments of this application.

It should be understood that the system architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the system architecture and the emergence of new service scenarios, the technical solutions provided in embodiments of this application are also applicable to similar technical problems.

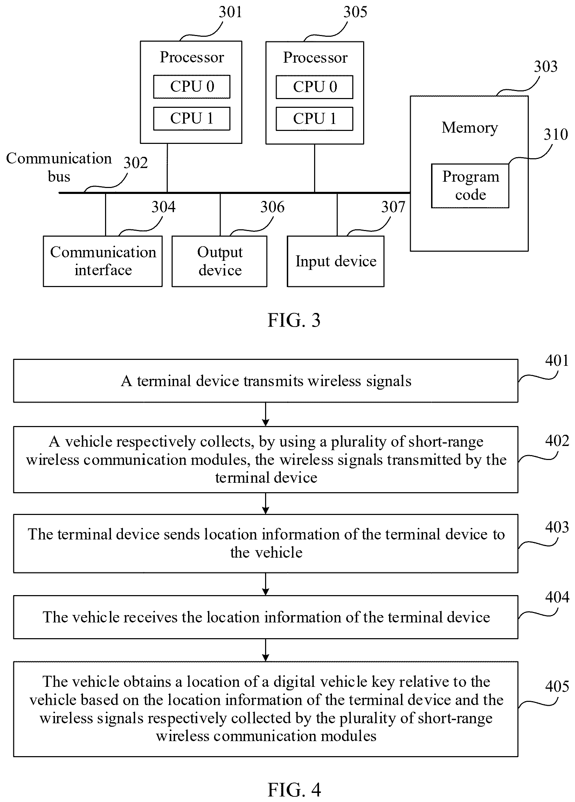

FIG. 3 is a diagram of a structure of an electronic device according to an embodiment of this application. Optionally, the electronic device is a part of the vehicle shown in FIG. 1 or FIG. 2, for example, a part of the head unit, or is a part or all of the terminal device shown in FIG. 1. The electronic device includes one or more processors 301, a communication bus 302, a memory 303, and one or more communication interfaces 304.

The processor 301 is a general-purpose central processing unit (central processing unit, CPU), a network processor (network processing, NP), a microprocessor, or one or more integrated circuits configured to implement the solutions in this application, for example, an application-specific integrated circuit (application-specific integrated circuit, ASIC), a programmable logic device (PLD), or a combination thereof. Optionally, the PLD is a complex programmable logic device (complex programmable logic device, CPLD), a field-programmable gate array (field-programmable gate array, FPGA), generic array logic (generic array logic, GAL), or any combination thereof.

The communication bus 302 is used to transmit information between the foregoing components. Optionally, the communication bus 302 is classified into an address bus, a data bus, a control bus, and the like. For ease of representation, only one thick line is used to represent the bus in FIG. 3, but this does not mean that there is only one bus or only one type of bus.

Optionally, the memory 303 is a read-only memory (read-only memory, ROM), a random access memory (random access memory, RAM), an electrically erasable programmable read-only memory (electrically erasable programmable read-only memory, EEPROM), an optical disc (including a compact disc read-only memory (compact disc read-only memory, CD-ROM), a compact disc, a laser disc, a digital versatile disc, a Blu-ray disc, or the like), a magnetic disk storage medium or another magnetic storage device, or any other medium that can be used to carry or store expected program code in a form of instructions or a data structure and that is accessible to a computer, but is not limited thereto. The memory 303 exists independently, and is connected to the processor 301 through the communication bus 302. Alternatively, the memory 303 is integrated with the processor 301.

The communication interface 304 is configured to communicate with another device or a communication network by using any apparatus like a transceiver. The communication interface 304 includes a wired communication interface, or optionally includes a wireless communication interface. The wired communication interface is, for example, an Ethernet interface. Optionally, the Ethernet interface is an optical interface, an electrical interface, or a combination thereof. The wireless communication interface is a wireless local area network (wireless local area network, WLAN) interface, a cellular network communication interface, a combination thereof, or the like. Optionally, in some embodiments, the electronic device includes a plurality of processors, for example, the processor 301 and a processor 305 shown in FIG. 3. Each of these processors is a single-core processor or a multi-core processor. Optionally, the processor herein is one or more devices, circuits, and/or processing cores for processing data (for example, computer program instructions).

During specific implementation, in an embodiment, the electronic device further includes an output device 306 and an input device 307. The output device 306 communicates with the processor 301, and can display information in a plurality of manners. For example, the output device 306 is a liquid crystal display (liquid crystal display, LCD), a light emitting diode (light emitting diode, LED) display device, a cathode ray tube (cathode ray tube, CRT) display device, or a projector (projector). The input device 307 communicates with the processor 301, and can receive user input in a plurality of manners. For example, the input device 207 is a mouse, a keyboard, a touchscreen device, or a sensing device.

In some embodiments, the memory 303 is configured to store program code 310 for executing the solutions in this application, and the processor 301 can execute the program code 310 stored in the memory 303. The program code includes one or more software modules, and the electronic device can implement, by using the processor 301 and the program code 310 in the memory 303, a digital vehicle key positioning method provided in the following embodiment in FIG. 4.

FIG. 4 is a flowchart of a digital vehicle key positioning method according to an embodiment of this application. The method is applied to a digital vehicle key positioning system. The system includes a vehicle and a terminal device. The vehicle has a plurality of short-range wireless communication modules, and the terminal device has a digital vehicle key of the vehicle. As shown in FIG. 4, the method includes the following steps.

Step 401: The terminal device transmits wireless signals.

In this embodiment of this application, the terminal device may transmit the wireless signal after establishing a wireless communication connection to the vehicle. For example, the terminal device periodically broadcasts data packets after establishing the wireless communication connection to the vehicle. In other words, the wireless signal may be in a form of a data packet. In addition, the wireless signal transmitted by the terminal device includes one or more of a Bluetooth signal, a UWB signal, an SLB signal, and an SLE signal.

The wireless communication connection established between the terminal device and the vehicle may be a Bluetooth connection or another wireless communication connection. This is not limited in this application. The following uses an example in which the wireless communication connection established between the terminal device and the vehicle is a Bluetooth connection for description.

For example, the vehicle includes a head unit, and the head unit includes a Bluetooth module. The Bluetooth module of the head unit broadcasts a Bluetooth signal. The Bluetooth module of the terminal device detects the Bluetooth signal of the head unit in a process of approaching the vehicle, and is bound, based on the detected Bluetooth signal, to the head unit by using a pairing code, to implement authentication between the head unit and the terminal device. The Bluetooth connection between the terminal device and the head unit is completed after the authentication. Then, the Bluetooth module of the terminal device periodically broadcasts data packets, that is, the terminal device transmits Bluetooth signals to an environment, so that a plurality of Bluetooth modules in the vehicle receive the Bluetooth signals.

It should be understood that types of the wireless signals transmitted by the terminal device match types of the plurality of short-range wireless communication modules in the vehicle. For example, if the plurality of short-range wireless communication modules in the vehicle are all Bluetooth modules, the terminal device includes a Bluetooth module, and the wireless signal transmitted by the terminal device is a Bluetooth signal transmitted by the Bluetooth module of the terminal device. For another example, if types of the plurality of short-range wireless communication modules in the vehicle are different, and the plurality of short-range wireless communication modules include a Bluetooth module, a UWB module, and the like, the terminal device also includes a Bluetooth module, a UWB module, and the like, and the wireless signal transmitted by the terminal device includes a Bluetooth signal, a UWB signal, and the like. Certainly, in some possible embodiments, the types of the wireless signals transmitted by the terminal device may alternatively be different from the types of the plurality of short-range wireless communication modules in the vehicle, provided that the vehicle can process the wireless signals that are transmitted by the terminal device and that are collected by the plurality of short-range wireless communication modules.

Step 402: The vehicle respectively collects, by using the plurality of short-range wireless communication modules, the wireless signals transmitted by the terminal device.

In this embodiment of this application, after establishing the wireless communication connection to the terminal device, the vehicle may collect the wireless signals transmitted by the terminal device by using the plurality of short-range wireless communication modules.

The types of the plurality of short-range wireless communication modules may be the same. For example, the plurality of short-range wireless communication modules may all include Bluetooth modules. Alternatively, the types of the plurality of short-range wireless communication modules may be different. For example, the primary base station includes a Bluetooth module, and the secondary base station includes a UWB module. For another example, the primary base station and one secondary base station each include a Bluetooth module, and each of the remaining secondary base stations includes a UWB module or an SLE module. The Bluetooth module may also be referred to as a Bluetooth base station, a Bluetooth tag, or the like. In addition, the plurality of short-range wireless communication modules are located at different locations. In this way, ranging is performed on the digital vehicle key by using the plurality of short-range wireless communication modules at the plurality of locations, so that ranging precision of the digital vehicle key can be improved, and positioning precision of the digital vehicle key can be improved. Optionally, the plurality of short-range wireless communication modules include one primary base station and at least one secondary base station. The vehicle includes a head unit, and the head unit includes a primary base station. After establishing a wireless communication connection to the terminal device, the head unit collects, by using the primary base station, a wireless signal transmitted by the terminal device, and sends a fourth instruction to the at least one secondary base station. The fourth instruction indicates the at least one secondary base station to collect the wireless signal transmitted by the terminal device. After receiving the fourth instruction, the at least one secondary base station collects, in response to the fourth instruction, the wireless signal transmitted by the terminal device.

The at least one secondary base station may send the collected wireless signal to the head unit, and the head unit receives the wireless signal collected by the at least one secondary base station. Alternatively, the at least one secondary base station processes the collected wireless signal, and sends data obtained through processing to the head unit.

For example, one secondary base station is a Bluetooth base station. After collecting a wireless signal, the Bluetooth base station determines signal strength of the collected wireless signal, to obtain received signal strength indication (received signal strength indication, RSSI) data, and reports the RSSI data to the head unit. The RSSI data represents the signal strength of the wireless signal received by the Bluetooth base station. For another example, one secondary base station is a UWB base station. After collecting a wireless signal, the UWB base station determines distance estimation data based on the collected wireless signal, and reports the distance estimation data to the head unit. The distance estimation data includes an estimated value of a distance between the terminal device and the UWB base station.

Step 403: The terminal device sends location information of the terminal device to the vehicle.

To improve positioning precision of the digital vehicle key, the terminal device further sends the location information of the terminal device to the vehicle. The location information of the terminal device and the wireless signal transmitted by the terminal device are both used by the vehicle to obtain a location of the digital vehicle key relative to the vehicle.

The location information of the terminal device is location information that is of the terminal device relative to the vehicle and that is determined by the terminal device, and may be specifically location information of the terminal device relative to the head unit. Alternatively, the location information of the terminal device is location information of the terminal device in a world map. Simply speaking, the location information of the terminal device may be relative location information, or may be absolute location information. This is not limited in embodiments of this application.

In this embodiment of this application, the terminal device has a PDR function, and the location information of the terminal device includes PDR data. It should be understood that the PDR function is not intended to limit embodiments of this application. In some other embodiments, the terminal device may alternatively determine the location information of the terminal device by using another function similar to the PDR function.

For example, the location information of the terminal device includes the PDR data. After collecting sensor data by using one or more sensors such as an IMU, a VIO, a wheel speed sensor, an accelerometer, a magnetometer, and a gyroscope in the terminal device, the terminal device processes the sensor data by using the PDR function, to obtain the PDR data.

The PDR data includes two-dimensional coordinates, and the two-dimensional coordinates include an X coordinate and a Y coordinate. For example, the location information of the terminal device is the location information of the terminal device relative to the head unit. The X coordinate and the Y coordinate may be coordinates of the terminal device when the head unit is used as an origin and a ground is used as a coordinate plane. Alternatively, the PDR data includes three-dimensional coordinates, and the three-dimensional coordinates include the X coordinate and the Y coordinate, and further include a Z coordinate. Still for example, the location information of the terminal device is the location information of the terminal device relative to the head unit. The Z coordinate is a coordinate of the terminal device perpendicular to the ground.

It should be understood that, generally, the terminal device and the head unit are approximately located on a same horizontal plane. Therefore, the PDR data may not include the Z coordinate. Alternatively, the PDR data includes the Z coordinate, but the vehicle may subsequently ignore the received Z coordinate of the terminal device. In other words, the Z coordinate is not used for calculation.

Determining and sending the location information of the terminal device by the terminal device consumes specific resources of the terminal device, including a computing resource, a memory resource, a power resource, and the like. To reduce resource waste of the terminal device, in this embodiment of this application, the vehicle can control the terminal device to start and/or stop sending the location information of the terminal device. This is described below.

An implementation in which the vehicle controls the terminal device to start sending the location information is as follows: The vehicle sends a first instruction to the terminal device, where the first instruction indicates the terminal device to send the location information of the terminal device. Correspondingly, the terminal device receives the first instruction sent by the vehicle, and sends the location information of the terminal device to the vehicle.

The first instruction is sent when any one of a plurality of first conditions is met. The plurality of first conditions include: The wireless communication connection is established between the vehicle and the terminal device; the vehicle is parked or shifted into a parking gear; and the vehicle is parked and a door of the vehicle is opened.

In other words, after the wireless communication connection is established between the vehicle and the terminal device, the vehicle sends the first instruction to the terminal device, to indicate the terminal device to start sending the location information of the terminal device. The vehicle establishes the wireless communication connection to the terminal device in the process in which the terminal device approaches the vehicle. In this way, the terminal device starts to send the location information of the terminal device to the vehicle in the process in which the terminal device approaches the vehicle, so that the vehicle starts to position the terminal device, so as to implement unlocking control on the vehicle based on a positioning result.

When the vehicle implements unlocking on the vehicle or exits the parking gear based on the positioning result, the vehicle may indicate, by using a second instruction, the terminal device to stop sending the location information of the terminal device. Then, the vehicle may normally travel. When the vehicle is parked or shifted into the parking gear, or when the vehicle is parked and the door of the vehicle is opened, the vehicle sends the first instruction to the terminal device again, to indicate the terminal device to continue to send the location information of the terminal device. The vehicle being parked or shifted into the parking gear or the door of the vehicle being opened indicates that a driver usually gets off and leaves the vehicle, that is, the terminal device is to be far away from the vehicle. In this way, the terminal device continues to send the location information of the terminal device to the vehicle in a process in which the terminal device moves away from the vehicle, so that the vehicle starts to position the terminal device, to implement locking control on the vehicle based on a positioning result.

When the vehicle determines, based on the positioning result, that the terminal device reaches a locking area of the vehicle in the process in which the terminal device moves away from the vehicle, and implements locking of the vehicle, or when the wireless communication connection between the vehicle and the terminal device is disconnected, the vehicle may indicate, by using the second instruction, the terminal device to stop sending the location information of the terminal device. For detailed descriptions of the second instruction, refer to the following detailed descriptions in step 404.

For example, the location information of the terminal device includes the PDR data. With reference to the PDR function, the first instruction, and the second instruction, the first instruction sent by the vehicle to the terminal device may be referred to as a PDR start instruction, and the second instruction may be referred to as a PDR stop instruction. The terminal device can enable the PDR function under an indication of the PDR enabling instruction sent by the vehicle. After the PDR function is enabled, the terminal device runs a PDR algorithm by using the PDR function, to determine the location information of the terminal device, and sends the location information of the terminal device to the vehicle. Alternatively, the terminal device can stop the PDR function under an indication of the PDR stop instruction sent by the vehicle. After stopping the PDR function, the terminal device stops running a PDR algorithm, and stops sending the location information of the terminal device to the vehicle.

In this embodiment of this application, the location information of the terminal device includes information about a plurality of trajectory points. In other words, the terminal device continuously sends real-time location information of the terminal device to the vehicle, and the real-time location information represents a continuous moving trajectory of the terminal device.

Optionally, the vehicle sends a third instruction to the terminal device, where the third instruction indicates the terminal device to determine the information about the plurality of trajectory points at a first frequency. Correspondingly, the terminal device receives the third instruction sent by the vehicle, where the third instruction indicates the first frequency. After receiving the third instruction, the terminal device determines the information about the plurality of trajectory points at the first frequency. In other words, in this embodiment of this application, the vehicle is supported in controlling a frequency at which the terminal device outputs a trajectory point. In specific implementation, the frequency at which the terminal device outputs the trajectory point can be consistent with a frequency at which the vehicle determines an estimated distance value based on a wireless signal, to facilitate fusion positioning.

The first frequency may be 5 hertz (Hz), 10 (Hz), or another value.

It should be understood that the vehicle may use one data packet to carry both the first instruction and the third instruction, to indicate, by using the data packet, the terminal device to determine and send the information about the plurality of trajectory points of the terminal device at the first frequency. Alternatively, the vehicle may use two data packets to respectively carry the first instruction and the third instruction.

Optionally, in this solution, a user is further supported in selecting whether to enable a function of sending the location information of the terminal device to the vehicle. In specific implementation, the terminal device may further obtain a fourth instruction generated based on an operation of the user on the terminal device, and enable, after the fourth instruction is obtained, the function of sending the location information of the terminal device to the vehicle. Correspondingly, the terminal device can further obtain a fifth instruction generated based on an operation of the user on the terminal device, and disable, after the fifth instruction is obtained, the function of sending the location information of the terminal device to the vehicle.

For example, the terminal device is a mobile phone. A setting interface is displayed on the mobile phone, and the user may select, by operating the setting interface of the mobile phone, to choose to enable or disable the function of sending the location information of the terminal device to the vehicle.

It should be understood that, when the location information of the terminal device includes the PDR data, the step of sending the location information of the terminal device to the vehicle by the terminal device is performed when the terminal device enables the function of sending the location information of the terminal device to the vehicle and enables the PDR function. When the terminal device does not enable the function of sending the location information of the terminal device to the vehicle, the terminal device can still enable the PDR function to calculate the location information of the terminal device, but does not send the location information of the terminal device to the vehicle.

Step 404: The vehicle receives the location information of the terminal device.

Specifically, the head unit of the vehicle receives the location information of the terminal device. Alternatively, in some other possible embodiments, the vehicle receives the location information of the terminal device by using another module. That is, a module that is in the vehicle and that is configured to receive the location information of the terminal device is not limited in this solution. It should be noted that a sequence of step 401 and step 403 is not limited in this embodiment of this application. The terminal device may first start to transmit the wireless signal, and then start to send the location information of the terminal device. Alternatively, the terminal device may first send the location information of the terminal device, and then transmit the wireless signal. Alternatively, the terminal device may send the wireless signal and the location information of the terminal device at the same time.

Step 405: The vehicle obtains the location of the digital vehicle key relative to the vehicle based on the location information of the terminal device and the wireless signals respectively collected by the plurality of short-range wireless communication modules.

When receiving the location information of the terminal device and the wireless signals that are transmitted by the terminal device and that are respectively collected by the plurality of short-range wireless communication modules, the vehicle obtains the location of the digital vehicle key relative to the vehicle based on the location information of the terminal device and the wireless signals respectively collected by the plurality of short-range wireless communication modules. In other words, the continuous moving trajectory of the terminal device is fused to precisely position the digital vehicle key.

Determining the location of the digital vehicle key relative to the vehicle consumes specific resources of the vehicle. To reduce resource waste of the vehicle and ensure positioning precision and accuracy, when determining that the wireless signals collected by the plurality of short-range wireless communication modules meet a third condition, the vehicle may perform the step of obtaining the location of the digital vehicle key relative to the vehicle based on the location information of the terminal device and the wireless signals respectively collected by the plurality of short-range wireless communication modules.

In this embodiment of this application, the third condition includes: Signal strength of a plurality of consecutive frames of signals in wireless signals collected by at least P short-range wireless communication modules in the plurality of short-range wireless communication modules exceeds a signal strength threshold. P is an integer not less than 1 and not greater than a total quantity of the plurality of short-range wireless communication modules, a quantity of the plurality of consecutive frames of signals is M, and M is an integer not less than 2. The signal strength threshold may be -50 dB, -60 dB, or another value.

For example, P is 3, M is 10, and the signal strength threshold is -60 dB. If signal strength of 10 consecutive frames of signals in wireless signals collected by at least three short-range wireless communication modules in the plurality of short-range wireless communication modules exceeds -60 dB, the vehicle obtains the location of the digital vehicle key relative to the vehicle based on the location information of the terminal device and the wireless signals respectively collected by the plurality of short-range wireless communication modules.

It should be understood that the foregoing third condition is used to describe this solution by using an example, and is not intended to limit this solution. The third condition may further include some other possible conditions.

The following describes in detail an implementation of obtaining the location of the digital vehicle key relative to the vehicle by the vehicle.

In this embodiment of this application, the vehicle obtains the location of the digital vehicle key relative to the vehicle based on the location information of the terminal device, the wireless signals respectively collected by the plurality of short-range wireless communication modules, and location information of the plurality of short-range wireless communication modules. It should be understood that, because locations of the plurality of short-range wireless communication modules are different, the location information of the plurality of short-range wireless communication modules may be further fused to precisely position the digital vehicle key.

The vehicle determines, based on the wireless signals respectively collected by the plurality of short-range wireless communication modules, distance estimation data respectively corresponding to the plurality of short-range wireless communication modules. The distance estimation data includes an estimated value of a distance between a corresponding short-range wireless communication module and the digital vehicle key. The vehicle obtains the location of the digital vehicle key relative to the vehicle based on the location information of the terminal device, the distance estimation data respectively corresponding to the plurality of short-range wireless communication modules, and the location information of the plurality of short-range wireless communication modules. In other words, the vehicle first estimates, based on the wireless signals respectively collected by the plurality of short-range wireless communication modules, a distance between the digital vehicle key and each short-range wireless communication module, and then precisely positions the digital vehicle key with reference to the location information determined by the terminal device.

As can be learned from the foregoing, there are a plurality of types of short-range wireless communication modules that may be deployed on the vehicle. The types of the deployed plurality of short-range wireless communication modules may be the same or different. In addition, the plurality of short-range wireless communication modules may directly send the collected wireless signals to the head unit, or send, to the head unit, data obtained by processing the collected wireless signals. Based on this, there are a plurality of implementations of determining, by the vehicle based on the wireless signals respectively collected by the plurality of short-range wireless communication modules, the distance estimation data respectively corresponding to the plurality of short-range wireless communication modules. Some of the implementations are described herein.

For example, one secondary base station is a Bluetooth base station. The Bluetooth base station determines signal strength of a collected wireless signal to obtain RSSI data, and reports the RSSI data to the head unit. After receiving the RSSI data sent by the Bluetooth base station, the head unit determines, based on the RSSI data, distance estimation data corresponding to the Bluetooth base station, that is, determines location information between the Bluetooth base station and the digital vehicle key. For another example, one secondary base station is a UWB base station. The UWB base station determines distance estimation data based on the collected wireless signal, and reports the distance estimation data to the head unit. The UWB base station may determine the distance estimation data by using a time of flight (time of flight, TOF) algorithm, a time difference method, or another algorithm.

It should be understood that, in this embodiment of this application, an execution body for determining the distance estimation data is not limited to the head unit or another short-range wireless communication module, and a specific algorithm for determining the distance estimation data is not limited. In specific implementation, a specific implementation procedure of the process may be determined based on a category of a short-range wireless communication module that is actually deployed, a designed data exchange procedure, and the like.

After determining the distance estimation data respectively corresponding to the plurality of short-range wireless communication modules, the vehicle constructs a location relationship graph based on the location information of the terminal device, the distance estimation data respectively corresponding to the plurality of short-range wireless communication modules, and the location information of the plurality of short-range wireless communication modules. The location relationship graph represents a moving trajectory of the terminal device and a location relationship between the mobile terminal and each of the plurality of short-range wireless communication modules at each time point on the moving trajectory. Then, the vehicle obtains the location of the digital vehicle key relative to the head unit in a graph optimization manner based on the location relationship graph. In other words, in this embodiment of this application, the digital vehicle key may be positioned in the graph optimization manner.

The location information of the terminal device includes the information about the plurality of trajectory points determined at the first frequency. The distance estimation data corresponding to each short-range wireless communication module includes a plurality of estimated distance values determined at a second frequency. The location relationship graph includes a first subgraph and a second subgraph. An implementation procedure of constructing the location relationship graph by the vehicle based on the location information of the terminal device, the distance estimation data respectively corresponding to the plurality of short-range wireless communication modules, and the location information of the plurality of short-range wireless communication modules is as follows: constructing the first subgraph based on the information about the plurality of trajectory points, where the first subgraph represents the moving trajectory of the terminal device; when the first frequency is consistent with the second frequency, obtaining a first correspondence by matching the plurality of trajectory points with the plurality of estimated distance values corresponding to the short-range wireless communication modules, where the first correspondence represents a correspondence between the plurality of trajectory points and the plurality of estimated distance values corresponding to the short-range wireless communication modules; and constructing the second subgraph based on the first correspondence, where the second subgraph represents a location relationship between the terminal device and each of the plurality of short-range wireless communication modules at each trajectory point.

When the first frequency is inconsistent with the second frequency, the vehicle performs interpolation processing on the plurality of trajectory points at the second frequency, and obtains a second correspondence by matching the plurality of trajectory points obtained after interpolation processing with the plurality of estimated distance values corresponding to the short-range wireless communication modules. The second correspondence represents a correspondence between the plurality of trajectory points obtained after interpolation processing and the plurality of estimated distance values corresponding to the short-range wireless communication modules. Then, the vehicle constructs the second subgraph based on the second correspondence. When the first frequency is less than the second frequency, a quantity of the plurality of trajectory points obtained after interpolation processing is greater than a quantity of the plurality of trajectory points before interpolation processing. When the first frequency is greater than the second frequency, a quantity of the plurality of trajectory points obtained after interpolation processing is less than a quantity of the plurality of trajectory points before interpolation processing.

Alternatively, when the first frequency is inconsistent with the second frequency, the vehicle performs, at the first frequency, interpolation processing on the plurality of estimated distance values corresponding to the short-range wireless communication modules, and obtains a third correspondence by matching the plurality of trajectory points with the plurality of estimated distance values that are obtained after interpolation processing and that correspond to the short-range wireless communication modules. The third correspondence represents a correspondence between the plurality of trajectory points and the plurality of estimated distance values that are obtained after interpolation processing and that correspond to the short-range wireless communication modules. Then, the vehicle constructs the second subgraph based on the third correspondence. When the first frequency is less than the second frequency, a quantity of the plurality of estimated distance values obtained after interpolation processing is less than a quantity of the plurality of estimated distance values before interpolation processing. When the first frequency is greater than the second frequency, a quantity of the plurality of estimated distance values obtained after interpolation processing is greater than a quantity of the plurality of estimated distance values before interpolation processing.

Alternatively, when the first frequency is inconsistent with the second frequency, the vehicle may alternatively perform interpolation processing on both the plurality of trajectory points and the plurality of estimated distance values corresponding to the short-range wireless communication modules, and obtain a fourth correspondence by matching the plurality of trajectory points obtained after interpolation processing with the plurality of estimated distance values that are obtained after interpolation processing and that correspond to the short-range wireless communication modules. The fourth correspondence represents a correspondence between the plurality of trajectory points obtained after interpolation processing and the plurality of estimated distance values that are obtained after interpolation processing and that correspond to the short-range wireless communication modules. Then, the vehicle constructs the second subgraph based on the fourth correspondence.

It should be understood that the first frequency being consistent with the second frequency means that an error between the first frequency and the second frequency does not exceed an error threshold. For example, the first frequency being completely equal to the second frequency indicates that the first frequency is consistent with the second frequency, and the error between the first frequency and the second frequency being small also indicates that the first frequency is consistent with the second frequency. The error threshold may be 0.1 Hz, 0.05 Hz, or another value. It should be further understood that each trajectory point corresponds to time, time of the plurality of trajectory points is consecutive, and time of a trajectory point is time at which the terminal device travels to the corresponding trajectory point. Each estimated distance value also corresponds to time, time of the plurality of estimated distance values is consecutive, and time of an estimated distance value is time at which the corresponding short-range wireless communication module collects a corresponding frame of wireless signal. When the first frequency is consistent with the second frequency, each trajectory point directly corresponds to an estimated distance value closest to time, to obtain the first correspondence. When the first frequency is inconsistent with the second frequency, for example, interpolation processing is performed on the plurality of trajectory points, each trajectory point obtained after interpolation processing may correspond to an estimated distance value closest to time, to obtain the second correspondence. Similarly, when interpolation processing is performed on the plurality of estimated distance values corresponding to the short-range wireless communication modules, or when interpolation processing is performed on both the plurality of trajectory points and the plurality of estimated distance values corresponding to the short-range wireless communication modules, a trajectory point may correspond to an estimated distance value according to a principle of being closest to time. Details are not described herein.

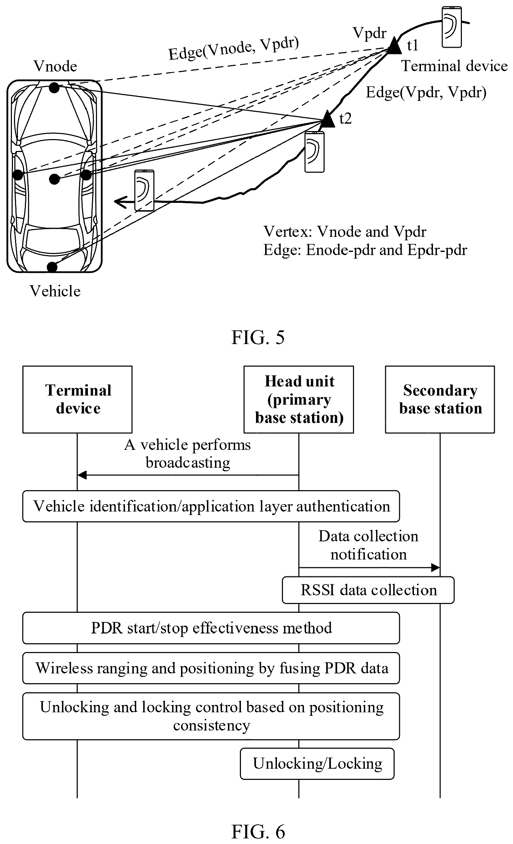

FIG. 5 is a diagram of a location relationship according to an embodiment of this application. The diagram of the location relationship includes a first subgraph and a second subgraph. The first subgraph and the second subgraph are understood with reference to FIG. 5.

Refer to FIG. 5. The first subgraph represents the moving trajectory of the terminal device (for example, a mobile phone in FIG. 5). A vertex in the first subgraph is the trajectory point, for example, trajectory points at time t1 and time t2. The vertex is denoted as Vpdr=$p_i(x, y, \theta)$, where $(x, y)$ represents location coordinates of the trajectory point, and $\theta$ represents a moving direction of the trajectory point. An edge in the first subgraph is denoted as Epdr-pdr=Edge(Vpdr, Vpdr). An absolute value of a distance difference between $p_i$ and $p_{i+1}$ is a step between adjacent trajectory points, and the step is denoted as $l=|p_{i+1}-p_i|$. An angle difference between $p_i$ and $p_{i+1}$ is denoted as $\Delta\theta=\theta_{i-1}-\theta_i$. A weight of the edge in the first subgraph is denoted as $w^1_i$. In this embodiment of this application, a value of $w^1_i$ is a constant C1, that is, $w^1_i$=C1. In some other embodiments, another variable value may be used.

The estimated distance value corresponding to each short-range wireless communication module is denoted as $O_i$. If the first frequency is consistent with the second frequency, for example, an output frequency (namely, the first frequency) at the trajectory point is high enough, $O_i$ directly corresponds to $p_i$ closest to time. If the first frequency is inconsistent with the second frequency, interpolation processing may be performed on the plurality of trajectory points, and $O_i$ corresponds to $p_j$ closest to time obtained after interpolation processing. A finally obtained correspondence between a trajectory point and an estimated distance value is represented as $\{(p_i, O_j)\}$. Both $i$ and $j\in[1, N]$, where N represents a total quantity of the plurality of estimated distance values.

The second subgraph represents a location relationship between the terminal device and each of the plurality of short-range wireless communication modules at each trajectory point. Vertices in the second subgraph include the trajectory point in the correspondence and a point indicating a location of each of the plurality of short-range wireless communication modules. The point indicating the location of the short-range wireless communication module is denoted as Vnode. An edge in the second subgraph is denoted as Enode-pdr=Edge(Vnode, Vpdr), and the estimated distance value is a length of the edge. A weight of the edge in the second subgraph is denoted as $w^2_i$. In this embodiment of this application, to improve positioning precision, an additional weight $w^2_{i,r}$ is added to a short-distance edge, as shown in a formula (1). A finally used weight $w^2_i$ is shown in a formula (2).

$$w^2_{i,r} = \begin{cases} \overline{O} - O_i, & O_i < \overline{O} \\ 0, & O_i \geq \overline{O} \end{cases} \tag{1}$$

$$w^2_i = C2 * \frac{w^2_{i,r} + K_{i,acc}}{\sum_{i=1}^{N}(w^2_{i,r} + K_{i,acc})} \tag{2}$$

Herein, C2 represents a constant. $K_{i,acc}$ indicates a ranging confidence level, and $K_{i,acc}\in[0, 1]$. In this embodiment of this application, C1 and C2 may be the same or different. Ranging confidence levels corresponding to different types of short-range wireless communication modules may be different, so that positioning precision can be improved. For example, a ranging confidence level corresponding to a Bluetooth module may increase as an estimated distance value decreases, and a ranging confidence level corresponding to a UWB module may be a constant.

After the first subgraph and the second subgraph are constructed, the vehicle obtains, based on the first subgraph and the second subgraph, the location of the digital vehicle key relative to the head unit in the graph optimization manner. The graph optimization manner includes constructing a nonlinear optimization target function, and obtaining the location of the digital vehicle key relative to the vehicle by solving an optimal solution of the target function.

The target function is $F(d)$ shown in a formula (3), and the optimal solution is $d^*$ shown in a formula (4). A related algorithm for solving the optimal solution of the target function may be a Gauss-Newton iteration method, g2o, Ceres, a quasi-Newton method (BFGS), or the like. This is not limited in embodiments of this application.

$$F(d) = \sum_i e_i(d_i, z_i)^{\mathsf{T}} \Omega_i e_i(d_i, z_i) \tag{3}$$

$$d^* = \arg\min_{d} F(d) \tag{4}$$

Herein, $z_i$ represents an observation value, for example, the estimated distance value, $d_i$ represents a to-be-solved variable, namely, a true value, $e_i(d_i, z_i)$ represents an error between $d_i$ and $z_i$, and $(\cdot)^{\mathsf{T}}$ represents matrix transposition. $\Omega_i$ represents a weight.

$$\Omega_i = \begin{bmatrix} w_1 & 0 & 0 & 0 \\ 0 & w_2 & 0 & 0 \\ 0 & 0 & \dots & 0 \\ 0 & 0 & 0 & w_N \end{bmatrix}$$

, where w is $w^1_i$ or $w^2_i$.

It should be understood that, an essence of the graph optimization manner is to input the estimated distance value, the location information of the trajectory point, and the weight into a graph optimization-related algorithm, and output, by using the related algorithm, a variable value at which the target function reaches a minimum value. An output result is a finally obtained location of the digital vehicle key relative to the vehicle.

In this embodiment of this application, the location of the digital vehicle key relative to the vehicle may be a location of the digital vehicle key relative to a reference point in the vehicle. The reference point may be the head unit. Certainly, the reference point may alternatively be another location in the vehicle.

The foregoing describes a case in which the vehicle obtains the location of the digital vehicle key relative to the vehicle based on the received location information of the terminal device and the wireless signals respectively collected by using the plurality of short-range wireless communication modules in this embodiment of this application.

It should be understood that, if the location that is of the digital vehicle key relative to the vehicle and that is obtained by the vehicle by using the graph optimization-related algorithm includes coordinates of the digital vehicle key relative to the vehicle but does not include an angle of the digital vehicle key relative to the vehicle, after obtaining the coordinates of the digital vehicle key relative to the vehicle, the vehicle may further obtain a pose of the digital vehicle key relative to the vehicle through pose fusion. The pose includes a distance and an angle. A specific implementation of pose fusion is not limited in embodiments of this application. If the location that is of the digital vehicle key relative to the vehicle and that is determined by the vehicle by using the graph optimization-related algorithm includes both a distance of the digital vehicle key relative to the vehicle and an angle of the digital vehicle key relative to the vehicle, no additional pose fusion is required.

It can be learned from the foregoing that the vehicle can further control the terminal device to stop sending the location information of the terminal device, to reduce resource consumption of the terminal device and the vehicle. In other words, in this embodiment of this application, the vehicle sends a second instruction to the terminal device, where the second instruction indicates the terminal device to stop sending the location information of the terminal device. Correspondingly, the terminal device receives the second instruction sent by the vehicle, and stops sending the location information of the terminal device to the vehicle after receiving the second instruction. The second instruction is sent when any one of a plurality of second conditions is met. The plurality of second conditions include: The vehicle is unlocked or the vehicle exits the parking gear; the wireless communication connection between the terminal device and the vehicle is disconnected; and the terminal device reaches the locking area of the vehicle in a process of moving away from the vehicle.

In other words, when the vehicle is unlocked or the vehicle exits the parking gear, the terminal device usually has already boarded the vehicle with a person, and the vehicle does not need to calculate the location of the digital vehicle key relative to the vehicle. In this case, the vehicle sends the second instruction to the terminal device, to indicate the terminal device to stop sending the location information of the terminal device. When the wireless communication connection between the terminal device and the vehicle is disconnected, or when the terminal device reaches the locking area of the vehicle in the process of moving away from the vehicle, the terminal device usually has already moved away from the vehicle with the person, and the vehicle does not need to calculate the location of the digital vehicle key relative to the vehicle. In this case, the vehicle also sends the second instruction to the terminal device.

With reference to Table 1, an example of a format of an instruction and data exchanged between the vehicle and the terminal device in this embodiment of this application is described. A PDR control instruction includes the PDR start instruction and the PDR stop instruction described above, and optionally, further includes a PDR pause instruction. A function of the PDR pause instruction is similar to a function of the PDR stop instruction. For example, the PDR stop instruction sent by the head unit to the terminal device after the vehicle is unlocked and exits the parking gear may be replaced with the PDR pause instruction. A PDR transmission frequency control instruction is the third instruction described above. PDR data is the PDR data of the terminal device, and a value of the PDR data may be in a type-value-length (type-value-length, TVL) format or another format.

Table 1

| Initiator | Instruction or data type (type) | Instruction or data value (value) |
|---|---|---|
| Head unit side | PDR control instruction | 01: start<br>02: stop<br>03: pause |
| | PDR transmission frequency control instruction | 0x05 (5 Hz, indicating that transmission is performed five times per second)<br>0x0A (10 Hz, indicating that transmission is performed 10 times per second) |
| Terminal side | PDR data | TVL (Type: 0x01 X-axis data Type: 0x02 Y-axis data Type: 0x03 Z-axis data) |

It can be learned from the foregoing that precise positioning of the digital vehicle key may be used to perform unlocking and locking control or other control on the vehicle. The following describes a process of implementing unlocking and locking control on the vehicle based on the location of the digital vehicle key relative to the vehicle.

FIG. 6 is a diagram of a function for controlling unlocking and locking of a vehicle according to an embodiment of this application. Refer to FIG. 6. The vehicle has one primary base station and at least one secondary base station, and a head unit of the vehicle includes the primary base station. For example, the primary base station and the secondary base station each include a Bluetooth module. Functions and effects of modules in a terminal device and the vehicle mainly include the following several points.

(1) Vehicle identification/application layer authentication. To be specific, the terminal device and a Bluetooth module of the head unit first establish a Bluetooth connection based on a Bluetooth data packet broadcast by the Bluetooth module of the head unit, and perform pairing and binding by using a pairing code, to implement authentication between the terminal device and the head unit.

(2) RSSI data collection. To be specific, after completing the Bluetooth connection to the Bluetooth module of the head unit and completing authentication, the terminal device periodically broadcasts Bluetooth data packets. The primary base station and the secondary base station in the vehicle collect the Bluetooth data packets broadcast by the terminal device, and respectively determine RSSI data. Each secondary base station reports the RSSI data determined by the secondary base station to the head unit.

(3) PDR start/stop effectiveness. To be specific, the terminal device has a PDR function. The following describes how to understand effectiveness and stopping of the PDR function in an actual scenario.

a. Scenario in which the terminal device approaches the vehicle to unlock the vehicle. In the process in which the terminal device approaches the vehicle, the terminal device establishes the wireless communication connection to the Bluetooth module of the head unit, and the head unit sends a PDR start instruction to the terminal device, to indicate the terminal device to start to send PDR data to the head unit. The head unit notifies each secondary node to collect data, that is, obtain and report RSSI data. The head unit obtains RSSI data of each short-range wireless communication module. When it is determined, based on RSSI data of short-range wireless communication modules, that signal strength of a plurality of consecutive frames of signals in wireless signals collected by the plurality of short-range wireless communication modules exceeds a signal strength threshold, the head unit determines to make a positioning algorithm effective, that is, obtains a location of the digital vehicle key relative to the vehicle based on location information (including the PDR data) of the terminal device and the wireless signals respectively collected by the plurality of short-range wireless communication modules. When the head unit determines, based on the location of the digital vehicle key relative to the vehicle, that the terminal device enters an unlocking area of the vehicle in a process of approaching the vehicle, the vehicle is unlocked. When the vehicle is unlocked and exits a parking gear, the head unit sends a PDR stop instruction to the terminal device, to indicate the terminal device to stop sending the PDR data.

b. Scenario in which the terminal device moves away from the vehicle to lock the vehicle. When a driver gets off the vehicle, when the head unit detects that the vehicle is shifted into the parking gear or a door of the vehicle is opened, the head unit sends a PDR start instruction to the terminal device, to indicate the terminal device to send the PDR data to the head unit. The head unit executes the positioning algorithm to obtain the location of the digital vehicle key relative to the vehicle. When it is determined, based on the location of the digital vehicle key relative to the vehicle, that the terminal device has entered a locking area of the vehicle in the process of moving away from the vehicle, the vehicle is locked. When the Bluetooth connection between the head unit and the terminal device is disconnected or the vehicle is locked, the head unit sends a PDR stop instruction to the terminal device, to indicate the terminal device to stop sending the PDR data to the head unit.

The unlocking area and the locking area of the vehicle may overlap, or may not overlap. This is not limited in embodiments of this application. The unlocking area and the locking area of the vehicle may be circular, oval, rounded rectangular, or in another shape. This is not limited in embodiments of this application.

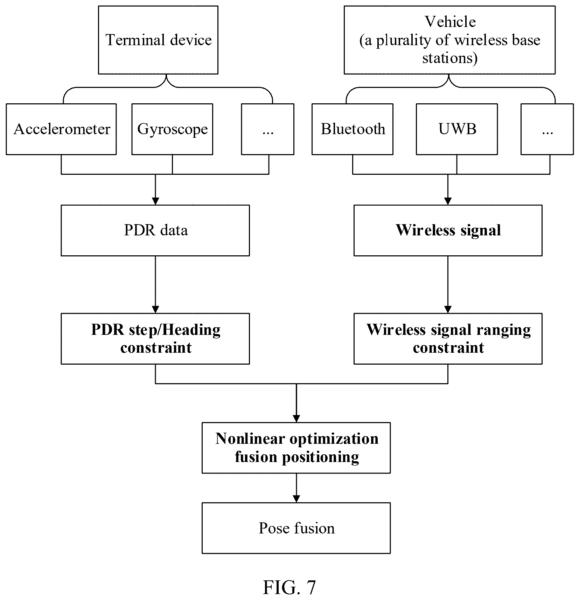

(4) Wireless ranging and positioning by fusing PDR data. To be specific, a specific implementation of the positioning algorithm in the vehicle is obtaining the location of the digital vehicle key relative to the vehicle based on the PDR data of the terminal device and the wireless signals respectively collected by the plurality of short-range wireless communication modules. Refer to FIG. 7. The positioning algorithm mainly includes the following three parts.

a. PDR step/Heading constraint. A first subgraph is constructed based on the PDR data of the terminal device, and a step and a heading constraint between trajectory points are constructed in a graph optimization-related algorithm. The step and the heading constraint are the step $l$ and the angle difference $\Delta\theta$ described above. The PDR data is obtained by processing collected sensor data by the terminal device. Sensors in the terminal device include the accelerometer and the gyroscope described above.

b. Wireless ranging constraint. Ranging resolving is performed based on the wireless signals respectively collected by the plurality of short-range wireless communication modules, that is, an estimated distance value corresponding to each short-range wireless communication module is determined, and a correspondence between a trajectory point and an estimated distance value is determined, that is, a ranging constraint is determined. A second subgraph is constructed based on the correspondence.

c. Nonlinear optimization fusion positioning. The location of the digital vehicle key relative to the vehicle is obtained based on the first subgraph and the second subgraph in a graph optimization manner. Specifically, fusion positioning is implemented in a nonlinear optimization manner based on the PDR step/heading constraint and the wireless ranging constraint. If the location of the digital vehicle key relative to the vehicle determined through fusion positioning does not include an angle of the digital vehicle key relative to the vehicle, after the location of the digital vehicle key relative to the vehicle is obtained through fusion positioning, the vehicle can further obtain a pose of the digital vehicle key relative to the vehicle through pose fusion. A specific implementation of pose fusion is not limited in embodiments of this application.

(5) Unlocking and locking control based on positioning consistency. That is, this solution can implement at least the following two effects.

a. Consistency of locking distances and consistency of unlocking distances. To be specific, in the processes in which the terminal device approaches and moves away from the vehicle, in all-scenario line of sight (line of sight, LOS) and non-line of sight (non-line of sight, NLOS) cases, this solution can implement precise positioning of the digital vehicle key, and implement the consistency of the locking distances and the consistency of the unlocking distances of the vehicle based on precise positioning. That is, unlocking distances in various cases are basically consistent, and locking distances in various cases are also basically consistent. The NLOS case includes a case in which a user carrying the terminal device turns around, swings an arm, or places the terminal device in a backpack or a pocket. In the NLOS case, a wireless signal received by the vehicle is unstable.

b. Status consistency. To be specific, a ping-pong problem of vehicle unlocking and locking can be effectively resolved through precise positioning of the digital vehicle key.

In conclusion, in this embodiment of this application, the vehicle can receive the location information sent by the terminal device, and obtain the location of the digital vehicle key relative to the vehicle based on the location information of the terminal device and the wireless signals respectively collected by the plurality of short-range wireless communication modules on the vehicle. In other words, the location information determined by the terminal device and the wireless signal collected by the vehicle are fused to implement more precise positioning of the digital vehicle key, thereby reducing a positioning error of the digital vehicle key, improving positioning precision, and effectively resolving the ping-pong problem of vehicle unlocking and locking and consistency problems of the unlocking distances and the locking distances.

In a specific implementation, the PDR data and the wireless ranging data are fused to implement precise positioning, and seamless unlocking and locking of the vehicle based on the digital vehicle key are implemented. Compared with positioning performed in a related technology by using only the wireless ranging data, in this solution, a positioning error in the NLOS scenario is small, and a capability of continuously positioning the digital vehicle key is provided. In addition, the vehicle can control, by using an instruction, the terminal device to enable and disable the PDR function seamlessly without a user operation on the terminal device, and can control resource consumption of the terminal device and the vehicle.

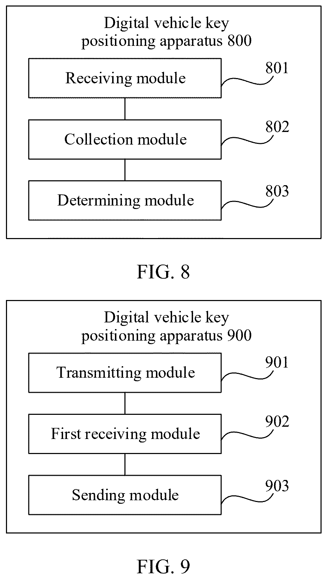

FIG. 8 is a diagram of a structure of a digital vehicle key positioning apparatus 800 according to an embodiment of this application. The apparatus 800 may be implemented as a part or all of a vehicle by using software, hardware, or a combination thereof, for example, as a part of a head unit. The vehicle may be the vehicle shown in FIG. 1. In this embodiment of this application, the apparatus 800 is included in the vehicle, and the vehicle has a plurality of short-range wireless communication modules. Refer to FIG. 8. The apparatus 800 includes a receiving module 801, a collection module 802, and a determining module 803.

The receiving module 801 is configured to receive location information of a terminal device, where the terminal device has a digital vehicle key of the vehicle.

The collection module 802 is configured to respectively collect, by using the plurality of short-range wireless communication modules, wireless signals transmitted by the terminal device. The determining module 803 is configured to obtain a location of the digital vehicle key relative to the vehicle based on the location information of the terminal device and the wireless signals respectively collected by the plurality of short-range wireless communication modules. Optionally, the apparatus 800 further includes:

a first sending module, configured to send a first instruction to the terminal device, where the first instruction indicates the terminal device to send the location information of the terminal device.

Optionally, the first instruction is sent when any one of a plurality of first conditions is met.

The plurality of first conditions include:

A wireless communication connection is established between the vehicle and the terminal device;

the vehicle is parked or shifted into a parking gear; and
the vehicle is parked and a door of the vehicle is opened.

Optionally, the apparatus 800 further includes:

a second sending module, configured to send a second instruction to the terminal device, where the second instruction indicates the terminal device to stop sending the location information of the terminal device.

Optionally, the second instruction is sent when any one of a plurality of second conditions is met.

The plurality of second conditions include:

The vehicle is unlocked or the vehicle exits the parking gear;

the wireless communication connection between the terminal device and the vehicle is disconnected; and
the terminal device reaches a locking area of the vehicle in a process of moving away from the vehicle.

Optionally, the location information of the terminal device includes information about a plurality of trajectory points.

The apparatus 800 further includes:

a third sending module, configured to send a third instruction to the terminal device, where the third instruction indicates the terminal device to determine the information about the plurality of trajectory points at a first frequency.

Optionally, the terminal device has a PDR function, and the location information of the terminal device includes PDR data.

Optionally, the apparatus 800 further includes:

a triggering module, configured to: when it is determined that the wireless signals collected by the plurality of short-range wireless communication modules meet a third condition, trigger the determining module 803 to perform the step of obtaining the location of the digital vehicle key relative to the vehicle based on the location information of the terminal device and the wireless signals respectively collected by the plurality of short-range wireless communication modules.

The third condition includes:

Signal strength of a plurality of consecutive frames of signals in wireless signals collected by at least P short-range wireless communication modules in the plurality of short-range wireless communication modules exceeds a signal strength threshold, where P is not less than 1 and is not greater than a total quantity of the plurality of short-range wireless communication modules.

Optionally, the determining module 803 includes:

a determining submodule, configured to obtain the location of the digital vehicle key relative to the vehicle based on the location information of the terminal device, the wireless signals respectively collected by the plurality of short-range wireless communication modules, and location information of the plurality of short-range wireless communication modules. Optionally, each short-range wireless communication module is a Bluetooth module, a UWB module, an SLB module, or an SLE module.

In this embodiment of this application, the vehicle can receive the location information sent by the terminal device, and obtain the location of the digital vehicle key relative to the vehicle based on the location information of the terminal device and the wireless signals respectively collected by the plurality of short-range wireless communication modules on the vehicle. In other words, the location information determined by the terminal device and the wireless signal collected by the vehicle are fused to implement more precise positioning of the digital vehicle key, thereby reducing a positioning error of the digital vehicle key, improving positioning precision, and effectively resolving a ping-pong problem of vehicle unlocking and locking and consistency problems of unlocking distances and locking distances.

It should be noted that, when the digital vehicle key positioning apparatus provided in the foregoing embodiment positions the digital vehicle key, division of the functional modules is merely used as an example for description. In actual application, the foregoing functions may be allocated to different functional modules for implementation based on a requirement. To be specific, an internal structure of the apparatus is divided into different functional modules, to implement all or some of the foregoing functions. In addition, the digital vehicle key positioning apparatus provided in the foregoing embodiment and the embodiment of the digital vehicle key positioning method belong to a same concept. For a specific implementation process, refer to the method embodiment. Details are not described herein again.

FIG. 9 is a diagram of a structure of a digital vehicle key positioning apparatus 900 according to an embodiment of this application. The apparatus 900 may be implemented as a part or all of a terminal device by using software, hardware, or a combination thereof. The terminal device may be the terminal device shown in FIG. 1. In this embodiment of this application, the apparatus 900 is included in the terminal device, and the terminal device has a digital vehicle key of a vehicle. Refer to FIG. 9. The apparatus 900 includes a transmitting module 901, a first receiving module 902, and a sending module 903.

The transmitting module 901 is configured to transmit a wireless signal.

The first receiving module 902 is configured to receive a first instruction sent by the vehicle.

The sending module 903 is configured to send location information of the terminal device to the vehicle after the first instruction is received, where the location information of the terminal device and the wireless signal are used by the vehicle to obtain a location of the digital vehicle key relative to the vehicle.

Optionally, the apparatus 900 further includes:

a second receiving module, configured to receive a second instruction sent by the vehicle; and
a stopping module, configured to stop sending the location information of the terminal device to the vehicle after the second instruction is received.

Optionally, the location information of the terminal device includes information about a plurality of trajectory points.

The apparatus 900 further includes:

a third receiving module, configured to receive a third instruction sent by the vehicle, where the third instruction indicates a first frequency; and
a determining module, configured to: after the third instruction is received, determine the information about the plurality of trajectory points at the first frequency.

Optionally, the terminal device has a PDR function, and the location information of the terminal device includes PDR data.

Optionally, the apparatus 900 further includes:

an obtaining module, configured to obtain a fourth instruction generated based on an operation of a user on the terminal device; and
a function enabling module, configured to: after the fourth instruction is obtained, enable a function of sending the location information of the terminal device to the vehicle.

In this embodiment of this application, the vehicle can receive the location information sent by the terminal device, and obtain the location of the digital vehicle key relative to the vehicle based on the location information of the terminal device and the wireless signals respectively collected by the plurality of short-range wireless communication modules on the vehicle. In other words, the location information determined by the terminal device and the wireless signal collected by the vehicle are fused to implement more precise positioning of the digital vehicle key, thereby reducing a positioning error of the digital vehicle key, improving positioning precision, and effectively resolving a ping-pong problem of vehicle unlocking and locking and consistency problems of unlocking distances and locking distances.

It should be noted that, when the digital vehicle key positioning apparatus provided in the foregoing embodiment positions the digital vehicle key, division of the functional modules is merely used as an example for description. In actual application, the foregoing functions may be allocated to different functional modules for implementation based on a requirement. To be specific, an internal structure of the apparatus is divided into different functional modules, to implement all or some of the foregoing functions. In addition, the digital vehicle key positioning apparatus provided in the foregoing embodiment and the embodiment of the digital vehicle key positioning method belong to a same concept. For a specific implementation process, refer to the method embodiment. Details are not described herein again.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or other programmable apparatus. The computer instructions may be stored in a computer-readable storage medium, or may be transmitted from a computer-readable storage medium to another computer-readable storage medium. For example, the computer instructions may be transmitted from a website, a computer, a server or a data center to another website, computer, server or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid state disk (solid state disk, SSD)), or the like. It should be noted that the computer-readable storage medium mentioned in embodiments of this application may be a non-volatile storage medium, that is, may be a non-transitory storage medium.

It should be understood that "at least one" in this specification means one or more, and "a plurality of" means two or more. In descriptions of embodiments of this application, "/" means "or" unless otherwise specified. For example, A/B may indicate A or B. In this specification, "and/or" merely describes an association relationship between associated objects and indicates that three relationships may exist. For example, A and/or B may indicate the following three cases: Only A exists, both A and B exist, and only B exists. In addition, to clearly describe the technical solutions in embodiments of this application, terms such as "first" and "second" are used in the embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It should be noted that information (including but not limited to user equipment information, personal information of a user, and the like), data (including but not limited to data used for analysis, stored data, displayed data, and the like), and signals in embodiments of this application are used under authorization by the user or full authorization by all parties, and capturing, use, and processing of related data need to conform to related laws, regulations, and standards of related countries and regions.

The foregoing descriptions are merely embodiments of this application, but are not intended to limit this application. Any modification, equivalent replacement, or improvement made without departing from the spirit and principle of this application should fall within the protection scope of this application.

**Claims**

1. A digital vehicle key positioning system, wherein the system comprises a vehicle and a terminal device, the vehicle has a plurality of short-range wireless communication modules, and the terminal device has a digital vehicle key of the vehicle;

   the terminal device is configured to: transmit wireless signals, and send location information of the terminal device to the vehicle; and
   the vehicle is configured to: receive the location information of the terminal device, respectively collect the wireless signals by using the plurality of short-range wireless communication modules, and obtain a location of the digital vehicle key relative to the vehicle based on the location information of the terminal device and the wireless signals respectively collected by the plurality of short-range wireless communication modules.

2. The system according to claim 1, wherein

   the vehicle is further configured to send a first instruction to the terminal device; and
   the terminal device is configured to send the location information of the terminal device to the vehicle after receiving the first instruction.

3. The system according to claim 2, wherein

   the vehicle is further configured to send a second instruction to the terminal device; and
   the terminal device is further configured to stop sending the location information of the terminal device to the vehicle after receiving the second instruction.

4. The system according to any one of claims 1 to 3, wherein the terminal device has a pedestrian dead reckoning PDR function, and the location information of the terminal device comprises PDR data.

5. A digital vehicle key positioning method, applied to a vehicle, wherein the vehicle has a plurality of short-range wireless communication modules, and the method comprises:

   receiving location information of a terminal device, wherein the terminal device has a digital vehicle key of the vehicle;
   respectively collecting, by using the plurality of short-range wireless communication modules, wireless signals transmitted by the terminal device; and
   obtaining a location of the digital vehicle key relative to the vehicle based on the location information of the terminal device and the wireless signals respectively collected by the plurality of short-range wireless communication modules.

6. The method according to claim 5, wherein the method further comprises:
   sending a first instruction to the terminal device, wherein the first instruction indicates the terminal device to send the location information of the terminal device.

7. The method according to claim 6, wherein the first instruction is sent when any one of a plurality of first conditions is met; and
   the plurality of first conditions comprise:

   a wireless communication connection is established between the vehicle and the terminal device;
   the vehicle is parked or shifted into a parking gear; and
   the vehicle is parked and a door of the vehicle is opened.

8. The method according to any one of claims 5 to 7, wherein the method further comprises:
   sending a second instruction to the terminal device, wherein the second instruction indicates the terminal device to stop sending the location information of the terminal device.

9. The method according to claim 8, wherein the second instruction is sent when any one of a plurality of second conditions is met; and
   the plurality of second conditions comprise:

   the vehicle is unlocked or the vehicle exits the parking gear;
   the wireless communication connection between the terminal device and the vehicle is disconnected; and
   the terminal device reaches a locking area of the vehicle in a process of moving away from the vehicle.

10. The method according to any one of claims 5 to 9, wherein the location information of the terminal device comprises information about a plurality of trajectory points; and
    the method further comprises:
    sending a third instruction to the terminal device, wherein the third instruction indicates the terminal device to determine the information about the plurality of trajectory points at a first frequency.

11. The method according to any one of claims 5 to 10, wherein the terminal device has a pedestrian dead reckoning PDR function, and the location information of the terminal device comprises PDR data.

12. The method according to any one of claims 5 to 11, wherein the method further comprises:

    when it is determined that the wireless signals collected by the plurality of short-range wireless communication modules meet a third condition, performing the step of obtaining the location of the digital vehicle key relative to the vehicle based on the location information of the terminal device and the wireless signals respectively collected by the plurality of short-range wireless communication modules, wherein
    the third condition comprises:
    signal strength of a plurality of consecutive frames of signals in wireless signals collected by at least P short-range wireless communication modules in the plurality of short-range wireless communication modules exceeds a signal strength threshold, wherein P is not less than 1 and is not greater than a total quantity of the plurality of short-range wireless communication modules.

13. The method according to any one of claims 5 to 12, wherein obtaining the location of the digital vehicle key relative to the vehicle based on the location information of the terminal device and the wireless signals respectively collected by the plurality of short-range wireless communication modules comprises:
obtaining the location of the digital vehicle key relative to the vehicle based on the location information of the terminal device, the wireless signals respectively collected by the plurality of short-range wireless communication modules, and location information of the plurality of short-range wireless communication modules.

14. The method according to any one of claims 5 to 13, wherein each short-range wireless communication module is a Bluetooth module, an ultra-wideband UWB module, a SparkLink basic SLB module, or a SparkLink low energy SLE module.

15. A digital vehicle key positioning method, applied to a terminal device, wherein the terminal device has a digital vehicle key of a vehicle; and the method comprises:

transmitting a wireless signal;
receiving a first instruction sent by the vehicle; and
sending location information of the terminal device to the vehicle after the first instruction is received, wherein the location information of the terminal device and the wireless signal are used by the vehicle to obtain a location of the digital vehicle key relative to the vehicle.

16. The method according to claim 15, wherein the method further comprises:

receiving a second instruction sent by the vehicle; and
stopping sending the location information of the terminal device to the vehicle after the second instruction is received.

17. The method according to claim 15 or 16, wherein the location information of the terminal device comprises information about a plurality of trajectory points; and
the method further comprises:

receiving a third instruction sent by the vehicle, wherein the third instruction indicates a first frequency; and
after the third instruction is received, determining the information about the plurality of trajectory points at the first frequency.

18. The method according to any one of claims 15 to 17, wherein the terminal device has a pedestrian dead reckoning PDR function, and the location information of the terminal device comprises PDR data.

19. The method according to any one of claims 15 to 18, wherein the method further comprises:

obtaining a fourth instruction generated based on an operation of a user on the terminal device; and
after the fourth instruction is obtained, enabling a function of sending the location information of the terminal device to the vehicle.

20. A digital vehicle key positioning apparatus, wherein the apparatus is comprised in a vehicle, the vehicle has a plurality of short-range wireless communication modules, and the apparatus comprises:

a receiving module, configured to receive location information of a terminal device, wherein the terminal device has a digital vehicle key of the vehicle;
a collection module, configured to respectively collect, by using the plurality of short-range wireless communication modules, wireless signals transmitted by the terminal device; and
a determining module, configured to obtain a location of the digital vehicle key relative to the vehicle based on the location information of the terminal device and the wireless signal respectively collected by the plurality of short-range wireless communication modules.

21. The apparatus according to claim 20, wherein the apparatus further comprises:
a first sending module, configured to send a first instruction to the terminal device, wherein the first instruction indicates the terminal device to send the location information of the terminal device.

22. The apparatus according to claim 21, wherein the first instruction is sent when any one of a plurality of first conditions is met; and

the plurality of first conditions comprise:

a wireless communication connection is established between the vehicle and the terminal device;
the vehicle is parked or shifted into a parking gear; and
the vehicle is parked and a door of the vehicle is opened.

23. The apparatus according to any one of claims 20 to 22, wherein the apparatus further comprises:
a second sending module, configured to send a second instruction to the terminal device, wherein the second instruction indicates the terminal device to stop sending the location information of the terminal device.

24. The apparatus according to claim 23, wherein the second instruction is sent when any one of a plurality of second conditions is met; and

the plurality of second conditions comprise:

the vehicle is unlocked or the vehicle exits the parking gear;
the wireless communication connection between the terminal device and the vehicle is disconnected; and
the terminal device reaches a locking area of the vehicle in a process of moving away from the vehicle.

25. The apparatus according to any one of claims 20 to 24, wherein the location information of the terminal device comprises information about a plurality of trajectory points; and
the apparatus further comprises:
a third sending module, configured to send a third instruction to the terminal device, wherein the third instruction indicates the terminal device to determine the information about the plurality of trajectory points at a first frequency.

26. The apparatus according to any one of claims 20 to 25, wherein the terminal device has a pedestrian dead reckoning PDR function, and the location information of the terminal device comprises PDR data.

27. The apparatus according to any one of claims 20 to 26, wherein the apparatus further comprises:

a triggering module, configured to: when it is determined that the wireless signals collected by the plurality of short-range wireless communication modules meet a third condition, trigger the determining module to perform the step of obtaining the location of the digital vehicle key relative to the vehicle based on the location information of the terminal device and the wireless signals respectively collected by the plurality of short-range wireless communication modules, wherein
the third condition comprises:
signal strength of a plurality of consecutive frames of signals in wireless signals collected by at least P short-range wireless communication modules in the plurality of short-range wireless communication modules exceeds a signal strength threshold, wherein P is not less than 1 and is not greater than a total quantity of the plurality of short-range wireless communication modules.

28. The apparatus according to any one of claims 20 to 27, wherein the determining module comprises:
a determining submodule, configured to obtain the location of the digital vehicle key relative to the vehicle based on the location information of the terminal device, the wireless signals respectively collected by the plurality of short-range wireless communication modules, and location information of the plurality of short-range wireless communication modules.

29. The apparatus according to any one of claims 20 to 28, wherein each short-range wireless communication module is a Bluetooth module, an ultra-wideband UWB module, a SparkLink basic SLB module, or a SparkLink low energy SLE module.

30. A digital vehicle key positioning apparatus, comprising a terminal device, wherein the terminal device has a digital vehicle key of a vehicle, and the apparatus comprises:

a transmitting module, configured to transmit a wireless signal;
a first receiving module, configured to receive a first instruction sent by the vehicle; and
a sending module, configured to send location information of the terminal device to the vehicle after the first instruction is received, wherein the location information of the terminal device and the wireless signal are used by the vehicle to obtain a location of the digital vehicle key relative to the vehicle.

31. The apparatus according to claim 30, wherein the apparatus further comprises:

   a second receiving module, configured to receive a second instruction sent by the vehicle; and
   a stopping module, configured to stop sending the location information of the terminal device to the vehicle after the second instruction is received.

32. The apparatus according to claim 30 or 31, wherein the location information of the terminal device comprises information about a plurality of trajectory points; and
   the apparatus further comprises:

   a third receiving module, configured to receive a third instruction sent by the vehicle, wherein the third instruction indicates a first frequency; and
   a determining module, configured to: after the third instruction is received, determine the information about the plurality of trajectory points at the first frequency.

33. The apparatus according to any one of claims 30 to 32, wherein the terminal device has a pedestrian dead reckoning PDR function, and the location information of the terminal device comprises PDR data.

34. The apparatus according to any one of claims 30 to 33, wherein the apparatus further comprises:

   an obtaining module, configured to obtain a fourth instruction generated based on an operation of a user on the terminal device; and
   a function enabling module, configured to: after the fourth instruction is obtained, enable a function of sending the location information of the terminal device to the vehicle.

35. A vehicle, wherein the vehicle has a plurality of short-range wireless communication modules; and
   the vehicle is configured to implement the steps of the method according to any one of claims 1 to 14.

36. A terminal device, wherein the terminal device has a digital vehicle key of a vehicle; and the terminal device is configured to implement the steps of the method according to any one of claims 15 to 19.

37. A computer-readable storage medium, wherein the storage medium stores a computer program, and when the computer program is executed by a processor, the method according to any one of claims 1 to 14 is implemented or the method according to any one of claims 15 to 19 is implemented.

38. A computer program product, wherein the computer program product stores computer instructions, and when the computer instructions are executed by a processor, the method according to any one of claims 1 to 14 is implemented or the method according to any one of claims 15 to 19 is implemented.

Vehicle

Short-range wireless
communication
module 1

Short-range wireless
communication
module 2

...

Short-range wireless
communication
module n

Terminal device
(digital vehicle key)

Positioning system

FIG. 1

Secondary
base station

Primary base
station
(in a head unit)

FIG. 2

301        305

| Processor | Processor |
|---|---|
| CPU 0 | CPU 0 |
| CPU 1 | CPU 1 |

303

Memory

310

Program code

Communication bus 302

304     306     307

| Communication interface | Output device | Input device |
|---|---|---|

**FIG. 3**

| | |
|---|---|
| A terminal device transmits wireless signals | 401 |
| A vehicle respectively collects, by using a plurality of short-range wireless communication modules, the wireless signals transmitted by the terminal device | 402 |
| The terminal device sends location information of the terminal device to the vehicle | 403 |
| The vehicle receives the location information of the terminal device | 404 |
| The vehicle obtains a location of a digital vehicle key relative to the vehicle based on the location information of the terminal device and the wireless signals respectively collected by the plurality of short-range wireless communication modules | 405 |

**FIG. 4**

Vnode

Edge(Vnode, Vpdr)

Vpdr

t1

Terminal device

Edge(Vpdr, Vpdr)

t2

Vertex: Vnode and Vpdr
Edge: Enode-pdr and Epdr-pdr

Vehicle

FIG. 5

| Terminal device | Head unit (primary base station) | Secondary base station |
|---|---|---|

A vehicle performs broadcasting

Vehicle identification/application layer authentication

Data collection notification

RSSI data collection

PDR start/stop effectiveness method

Wireless ranging and positioning by fusing PDR data

Unlocking and locking control based on positioning consistency

Unlocking/Locking

FIG. 6

FIG. 7

Digital vehicle key
positioning apparatus 800

Receiving module — 801

Collection module — 802

Determining module — 803

FIG. 8

Digital vehicle key
positioning apparatus 900

Transmitting module — 901

First receiving module — 902

Sending module — 903

FIG. 9

## INTERNATIONAL SEARCH REPORT

| | International application No. |
|---|---|
| | **PCT/CN2024/106521** |

**A.    CLASSIFICATION OF SUBJECT MATTER**

H04W 64/00(2009.01)i

According to International Patent Classification (IPC) or to both national classification and IPC

**B.    FIELDS SEARCHED**

Minimum documentation searched (classification system followed by classification symbols)

IPC:H04L,H04W,H04Q

Documentation searched other than minimum documentation to the extent that such documents are included in the fields searched

Electronic data base consulted during the international search (name of data base and, where practicable, search terms used)

CNKI, 3GPP, CNTXT, WPABSC, WPABS, DWPI, ENTXTC, ENTXT: 数字车钥匙, 定位系统, 短距离无线通信, 位置信息, 行人航位推算, 信号强度, 阈值, PDR, digital vehicle key, positioning system, short range wireless communication, location information, signal strength, threshold

**C.    DOCUMENTS CONSIDERED TO BE RELEVANT**

| Category* | Citation of document, with indication, where appropriate, of the relevant passages | Relevant to claim No. |
|---|---|---|
| Y | CN 114299644 A (LUXSHARE PRECISION INDUSTRIAL (KUNSHAN) CO., LTD.) 08 April 2022 (2022-04-08) <br> claims 1-13, and description, paragraphs 0033-0079 | 1-38 |
| Y | CN 107650862 A (WUHAN UNIVERSITY) 02 February 2018 (2018-02-02) <br> claims 1-10, and description, paragraphs 0003-0099 | 1-38 |
| A | CN 114415108 A (NANJING SILERGY MICROELECTRONIC TECHNOLOGY CO., LTD.) 29 April 2022 (2022-04-29) <br> entire document | 1-38 |
| A | WO 2020141658 A1 (KOREA INSTITUTE OF SCIENCE AND TECHNOLOGY) 09 July 2020 (2020-07-09) <br> entire document | 1-38 |
| A | US 2014232569 A1 (APPLE INC.) 21 August 2014 (2014-08-21) <br> entire document | 1-38 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **14 September 2024** | **23 September 2024** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/106521**

| Patent document cited in search report | | | Publication date (day/month/year) | Patent family member(s) | | | Publication date (day/month/year) |
|---|---|---|---|---|---|---|---|
| CN | 114299644 | A | 08 April 2022 | None | | | |
| CN | 107650862 | A | 02 February 2018 | None | | | |
| CN | 114415108 | A | 29 April 2022 | None | | | |
| WO | 2020141658 | A1 | 09 July 2020 | KR | 102094307 | B1 | 31 March 2020 |
| US | 2014232569 | A1 | 21 August 2014 | US | 9080878 | B2 | 14 July 2015 |
| | | | | WO | 2014130194 | A1 | 28 August 2014 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310924187